# EUROPEAN PATENT SPECIFICATION

(11) **EP 0 240 606 B1**
(45) Date of publication and mention of the grant of the patent: **01.09.1993**
(21) Application number: 86117099.1
(22) Date of filing: 09.12.1986
(51) Int. Cl.: G06F 9/38

(54) **Pipe-line processing system and microprocessor using the system**
Verarbeitungssystem in Pipelinestruktur und Mikroprozessor mit einem derartigen System
Système de traitement en pipeline et microprocesseur utilisant le système

(30) Priority: 27.03.1986 JP 67050/86
(43) Date of publication of application: 14.10.1987
(73) Proprietor: KABUSHIKI KAISHA TOSHIBA, Kawasaki-shi, Kanagawa-ken 210 (JP)
(72) Inventor: Okamoto, Kousei, Kunitachi-shi Tokyo (JP)
(74) Representative: Lehn, Werner, Dipl.-Ing.

(56) References cited:
- GB-A- 2 077 965
- US-A- 4 398 245

## Description

The present invention relates to a microprocessor pipe-line processing system, particularly to a pipe-line processing system capable of executing commands having a plurality of memory operands respectively at high speed and its microprocessor.

In recent microprocessors, a so-called pipe-line processing system is used in order to perform a high speed operation of commands. In the pipe-line processing system, commands are divided into a plurality of stages and are executed by operating the stages in parallel, so as to improve the processing speed of the commands.

In these microprocessors in which commands are executed according to the pipe-line system, in order to execute the commands of a machine language and having a plurality of memory operands, effective addresses corresponding to each memory operand are calculated when the commands of the machine language are converted into a particular instruction style adapted to the pipe-line processing.

For the purpose of calculating the effective addresses of the memory operands for a single command, the effective addresses corresponding to each memory operand respectively were calculated independently by a plurality of effective address calculating circuits for calculating the effective addresses of the memory operands by preparing the same number of the circuits as that of the memory operands in the microprocessors according to the prior art.

US-A-4 398 245 discloses a data processing system including a pipe-line for processing data instructions. This data processing system provides more than one address calculation circuit. In said known system multiple commands having different memory operands are executed at the same time. However, addresses are calculated using different address calculation circuits. Moreover, multiple address stacks are required in order to store the different addresses for an instruction having different memory operands. Therefore, said system is only a conventional system which does not allow the calculation of addresses by means of a single effective address calculation circuit.

The provision of the plurality of effective address calculating circuits in the microprocessor resulted in a disadvantage that the microprocessor became excessively complex and it became large in size.

On the other hand, a method has also been proposed heretofore that the effective addresses corresponding to a plurality of memory operands are calculated successively one by one through a single effective address calculating circuit. According to this method, each of the effective addresses corresponding to the plurality of the memory operands can be calculated by the single effective address calculating circuit as well. The calculation of the effective addresses, however, resulted in a problem that the execution time for the commands having a plurality of memory operands is delayed since the calculation of effective addresses and the operand fetch had to be done successively for every one memory operands. Consequently, a high speed execution of the commands having a plurality of memory operands can not be performed in the latter case as well.

GB 2 077 965 A1 discloses a data processing unit which uses pipe-line operands. The data processing unit is provided with a microprocessor unit, a bus, command decoding means, a single address unit and an operand fetch unit. Although each command is divided into different operands and merely one address unit is provided, the unit requires a very complex construction which includes a pre-fetch instruction buffer and further devices. The address calculating unit itself comprises a complex structure including a lot of different devices. Said unit requires high costs and the calculation speed is not very high due to the pre-fetching and decoding of different modes. In said unit disclosing two operand instructions, the fetch of the first operand occurs at the same time as the effective address calculation for the second operand.

It is therefore an object of the invention to provide an improved pipe-line processing system in a microprocessor so that commands having a plurality of memory operands, respectively can be executed in high speed without requiring a complex construction and a large size of a microprocessor.

Said object is solved by the features of claim 1.

It is advantageous that the commands having a plurality of memory operands are divided into a plurality of inner commands which have a single memory operand, respectively. Each of the inner commands thus divided is executed so as to calculate one effective address of one memory operand and to read the other memory operand from another effective address at the same time.

One feature of the present invention resides in a pipe-line processing system using a microprocessor having a single effective address calculating circuit, wherein any commands sent from the microprocessor and having a plurality of memory operands respectively are divided into a plurality of inner commands each having a single memory operand, and the calculation of at least one effective address of one memory operand and the processing of the other operand are performed at the same time in a certain time period.

Another feature of the present invention resides in a microprocessor of the pipe-line processing type which comprises: decoder means for decoding each of commands sent from external means and for determining if a particular command has a plurality of memory operands; dividing means connected to the decoder means for dividing the command having the plurality of memory operands into a plurality of inner commands, each having a single operand respectively; execution means connected to the dividing means for successively executing each inner command thus divided and having a single memory operand; and bus control means connected between the decoder means and the execution means as well as to a bus, for controlling the transfer of information among them.

The data processing unit of GB 2 077 965 A1 does not disclose the instruction dividing means of the present invention, relying instead on a more complicated execution pipe-line.

The invention has the further advantage according to which commands having a plurality of memory operands respectively can be executed in high speed without its construction being complex and without making the size of the microprocessor large.

Further embodiments are the subject matter of claims 2 and 3.

The object solution, advantages and features of the invention will be better understood from the following detailed description of the embodiments with reference to the accompanying drawings.
Fig. 1 is a block diagram of the construction of the microprocessor according to the present invention,
Fig. 2 indicates a command having a plurality of memory operands, sent from external means, and a plurality of inner commands divided,
Fig. 3 is a detailed construction of the execution means of fig. 1, and
Fig. 4 shows functional timing charts of the microprocessors according to the prior art and a function timing chart of the microprocessor according to the present invention.

### DESCRIPTION OF THE PREFERRED EMBODIMENTS

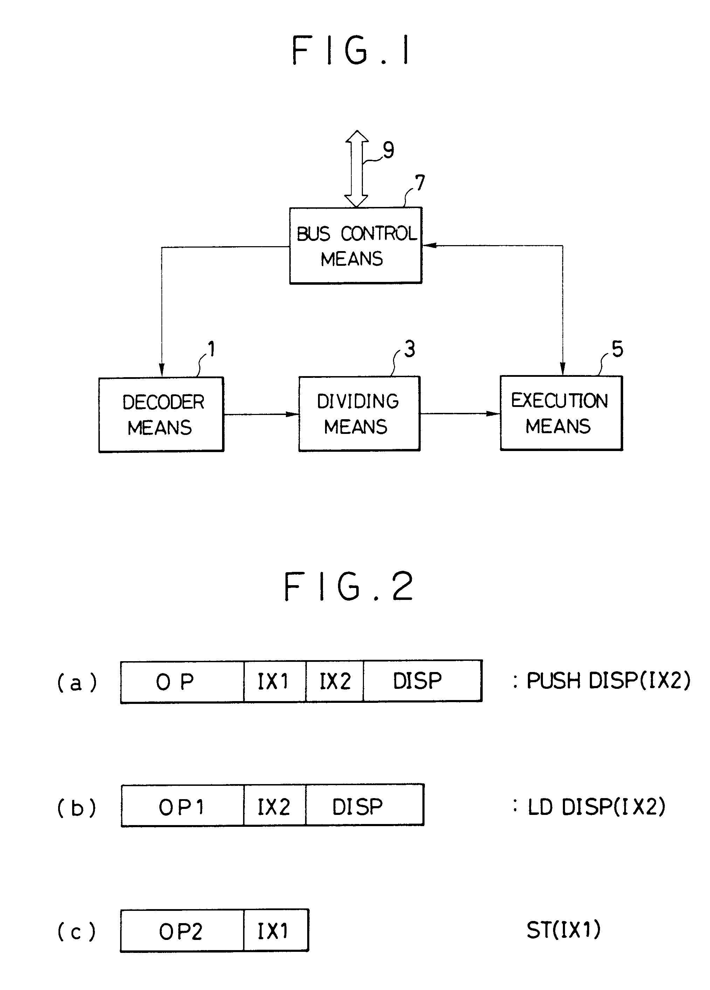

Referring to Fig. 1, the microprocessor according to the present invention comprises decoder means 1, divider means 3, execution means 5 and bus control means 7.

The decoder means 1 is connected through a bus 9 to a main memory not shown, in which commands of a machine language have been stored. The commands of the machine language picked up from the main memory are applied to the decoder means 1 through the bus 9.

The decoder means 1 decodes each of the commands thus applied and determines if any of commands thus received has a plurality of memory operands. When any of the commands is found to be the one having a plurality of memory operands, it is applied to the dividing means 3.

The dividing means 3 divides each of the commands having a plurality of memory operands into a plurality of any executable type commands respectively which are referred to hereinafter as "inner commands", each having a single memory operands, as will be explained and shown later. The inner commands thus divided are applied to the execution means 5 which has a single effective address calculating circuit and a microsequencer both of which are not shown here but will be shown later. The microsequencer in the execution means 5 designates the sequence of execution of the inner commands thus applied and a predetermined sequence of execution is performed for each of the inner commands.

More particularly, let us assume that one of the commands is, for example, like a command PUSH DISP (I x 2) having two memory operands as shown in Fig. 2 (a) which is applied to the decoder means 1 for decoding and is then applied to the dividing means 3 for dividing. The command is for summing a value in the zone DISP thereof to the content of a general purpose register designated by the field (I x 2) so as to establish one effective address (i.e., address A) of one memory operand while storing into other effective address (i.e., address B) of the other memory operand, with the content of the general purpose register designated by the field (I x 1) being the other effective address.

When the command PUSH DISP (I x 2) of Fig. 2(a) is applied to the dividing means 3, it divides the commands having the two memory operands (I x 1) and (I x 2) into the inner commands consisting of a load command LD DISP (I x 2) for reading out the memory operant stored in the address A in the main memory, and a store command ST (I x 1) for storing a memory operand thus read-out into the address B of the main memory, as shown in Fig. 2 (b) and (c). Then, the inner commands of the load LD DISP (I x 2) and the store ST (I x 1) are applied to the execution means 5.

The execution means 5 executes the inner commands thus supplied from the divider means 3 according to the pipe-line processing system.

The bus control means 7 controls the bus 9 which carries out the reading of the machine language commands and the transfer of the memory operands, so as to apply the commands from the main memory which is in turn connected to the bus control means 7 to the decoder means 1 through the bus 9, as well as the transfer of the operand data by the execution means 5.

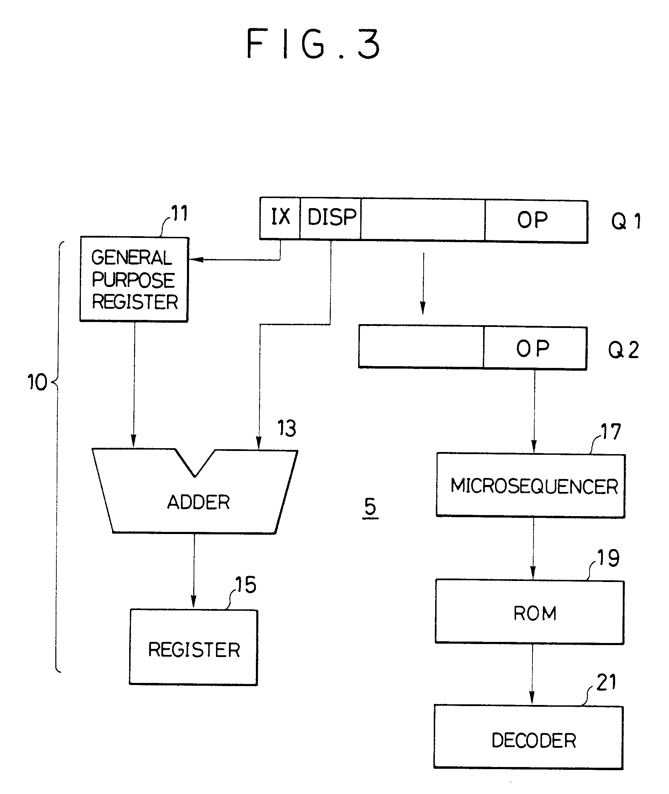

Fig. 3 shows a detailed contruction of the execution means 5 of Fig. 2. The execution means 5 comprises an effective address calculating circuit 10 for calculating the effective addresses of each of the memory operands, a microsequencer 17, a ROM 19, and a decoder 21, as well as stages Q₁ and Q₂.

The effective address calculating circuit 10 consists of a general purpose register 11, an adder 13, and a register 15. The general purpose register 11 includes a plurality of registers and each of the register is designated by the field (I x 1) or (I x 2) etc. of the inner command, where information to be used in the calculation of the effective address of the memory operands has been stored.

The adder 13 is for adding the information stored in a modification register in the general purpose register 11 which is designated by the field (I x 1), or (I x 2), etc. of each of the inner commands and the information of the zone DISP of the inner commands. Namely, the adder 15 calculates the effective address by adding the content of the modification register designated by the field (I x ) of each of the inner commands and the content of the zone DISP of each of the inner commands. The register 15 is for storing the effective address thus calculated by the adder 15.

The microsequencer 17 is for supplying particular addresses to the ROM 19, into which microcommands or microinstructions corresponding to each of the inner commands have been stored, in accordance with an operational code in the OP zone of the inner command. The decoder 21 is for decoding or interpret microinstructions thus read from the ROM 19.

The operation of the preferred embodiment of the microprocessor according to the present invention thus constructed will now be made with reference to Figs. 1 to 3.

When a command of a machine language and having a plurality of memory operands is applied to the decoder means 1 from the bus 9 through the bus control means 7, it is decoded in the decoder means 1. Assuming now that the command is, for instance, like the PUSH DISP (I x 2) having two memory operands (I x 1) and (I x 2) as shown in Fig. 2 (a), te operation will be performed as follows;

The push command decoded in the decoder means 1 is applied to the divider means 3, where it is divided into two inner commands consisting of a load command of LD DISP (I x 2) and a store command of ST (I x 1), as shown in Fig. 2 (b) and (c). Among each of the inner commands thus divided, the load command is firstly applied to the execution means 5 where the load command LD DISP (I x 2) is set up at the stage Q1 of an pipe-line system as shown in Fig. 3, the content of the modification register not shown in the general purpose register 11, designated by the field I x 2 of the load command is read out. The content of the modification register thus read is added to the content of the zone DISP of the same load command and a resulting effective address, i.e., address A is calculated and produced therefrom. The effective address thus produced is stored in the register 15.

After the above operation, the load command is moved to the stage Q2 of the pipe-line system, where the load command is again executed, and in order to convert it into a microinstruction a ROM, address into which the microinstruction has been stored is supplied to the ROM 19 in accordance with the operational code of the load command. The microinstruction corresponding to the load command stored in the ROM address is read out of the ROM 19 and it is then decoded in the decoder 21.

The microinstruction thus coded in the decoder 21 permits the memory operand to be read from the address A as an effective address of the load command, stored in the register 15 of the main memory.

Furthermore, at the same time when the load command is set up at the stage Q2 of the pipe-line system, the store command ST (I x 1) is set up at the stage Q1 of the pipe-line system. Then, the content of the modification register, not shown in the general purpose register 11, which is designated by the field of (I x 1) of the store command, that is, the other effective address of the store command as the address B is read out of it and it is stored in the register 15.

After this operation, the store command is moved to the stage Q2 of the pipe-line system, where an microinstruction corresponding to the store command is read from the ROM 19 in the similar manner as in the load command. The microinstruction thus read permits the memory operand, which has been read from the address A in the main memory by the load command, to be written in the other effective address of the store command, i.e., in the address B.

In this manner as described, the push command of PUSH DISP (I x 2), for instance, is divided into an load command LD DISP (I x 2) and a store command of ST (I x 1) and the execution of the load command can be performed at the same time with the calculation of the effective address of the store command, in the present invention.

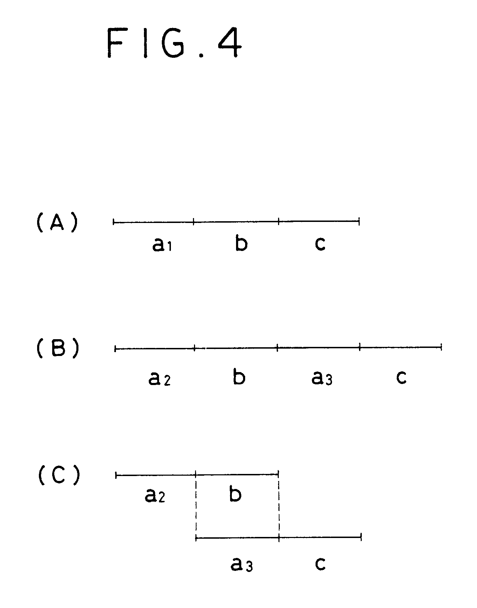

In this respect, in the microprocessor having two effective address calculating circuits according to the prior art, an command having two memory operands is executed in such a manner that the calculations of one effective address as an address A which corresponds to one memory operand and of the other effective address as an address B which corresponds to the other memory operand are performed in the time duration a₁, while the reading-out of the operand from the address A is performed in the time duration b and the writing of the other operand into the address B is performed in the time duration of c. In other words, they are performed at the execution speed of three clocks, as shown in Fig. 4 (A).

Fig. 4 (B) shows how the calculation of the effective addresses of the operands and the read/write operation are performed by a single effective address calculating circuit according to the prior art, with respect to a command having two memory operands when using a simple execution pipeline. Namely, in this system according to the prior art, the calculation of the address A is carried out during the time period of a2 and the reading-out of the operand from the address A is carried out in the time period of b, while the calculation of the address B is carried out in the time period of a3 and the writing of the other operand read out of the address A is carried out in the time period of c. In the other words, the operation is performed over the four clock periods, as shown in Fig. 4 (B).

Whereas in the microprocessor according to the present invention, the calculation of the address A is performed in the time period of a2, and the writing of the other operand in the address B is performed in the time period of c similar to Fig. 1, but the reading-out of the operand from the address A and the calculation of the address B can be performed at the same time in the time period of either b or a3. Namely, the operation can be carried out within three clock speeds by the use of a single effective address calculating circuit and without introducing a more complicated pipeline, according to the present invention.

As described in the foregoing embodiments of the pipe line-processing system and the microprocessor according to the present invention, since each of commands having a plurality of memory operands respectively are divided into a plurality of inner commands each having a single memory operands respectively and they are successively executed according to the pipe-line processing system, the calculation of one effective address and the processing of the other effective address of memory operands can be performed at the same time. As a result, the execution speed of the commands having a plurality of memory operands can be improved in the microprocessor according to the present invention without using a plurality of effective address calculating circuits.

## Claims

1. Microprocessor pipe-line processing system comprising:
decoder means (1) for decoding each command sent from external means and for determining whether a particular command has a plurality of memory operands;
dividing means (3) connected to said decoder means dividing said command having a plurality of memory operands into a plurality of inner commands each having a single operand respectively; and
execution means (5) connected to said dividing means for successively executing said inner commands;
said execution means comprising a single effective address calculating circuit (10) having a general purpose register (11) which in turn comprises a plurality of registers, an adder (13), and a second register (15);
said execution means further comprising at least first and second pipe-line stages (Q₁, Q₂) for storing inner commands in succession, wherein while a first inner command is stored in said first stage the effective address of its operand is calculated, and while a second inner command is stored in said second stage the operand of said second inner command is processed,
in order to calculate at least first and second effective adresses (A, B) of the memory operands, wherein at least the calculation of the second effective address (B) and processing of a first operand are performed at the same time.

2. Microprocessor as claimed in claim 1, wherein said first inner command divided from the command (PUSH DISP (I x 2) sent from the external means is a load command (LD DISP (I x 2)) and said second inner command divided therefrom is a store command (ST (I x 1)).

3. Microprocessor as claimed in claim 1, wherein when the first inner command is moved to the second stage so as to read one operand from the first effective address, the second inner command is placed in the first stage so as to calculate the second effective address, thereby permitting the calculation of the second effective address of one operand and the reading-out of the operand from the first effective address at the same time.

## Patentansprüche

1. Mikroprozessor Pipeline-Verarbeitungsystem das aufweist:
eine Decodereinrichtung (1) zum Decodieren eines jeden, von einer externen Einrichtung gesendeten Befehls, und zum Entscheiden darüber, ob ein spezieller Befehl mehrere Speicheroperanden besitzt;
eine mit der Decodereinrichtung verbundene Aufteilvorrichtung (3), die den Befehl mit mehreren Speicheroperanden in mehrere Innenbefehle aufteilt, von denen jeder jeweils einen einzigen Operanden besitzt; und
eine mit der Aufteilungseinrichtung verbundene Ausführungseinrichtung (5) zum sukzessiven Ausführen der Innenbefehle;
wobei die Ausführungseinrichtung einen einzigen Effektivadressen-Berechnungsschaltkreis (10) mit einem Allzweckregister (11), das wiederum mehrere Register enthält, einen Addierer (13) und ein zweites Register (15) aufweist;
die Ausführungseinrichtung desweiteren mindestens erste und zweite Pipelinestufen (Q1, Q2) zum Speichern von Innenbefehlen in Reihenfolge aufweist, wobei während dem ein erster Innenbefehl in der ersten Stufe gespeichert wird, die Effektivadresse seines Operanden berechnet wird, und während dem ein zweiter Innenbefehl in der zweiten Stufe gespeichert wird, die Effektivadresse des zweiten Operanden verarbeitet wird,
um mindestens erste und zweite Effektivadressen (A, B) der Speicheroperanden zu berechnen, wobei zumindest die Berechnung der zweiten Effektivadresse (B) und die Verarbeitung eines ersten Operanden zum selben Zeitpunkt ausgeführt werden.

2. Mikroprozessor nach Anspruch 1, dadurch gekennzeichnet, daß der erste von dem, von der externen Einrichtung gesendeten Befehl (PUSH DISP (I x 2)), abgeteilte Innenbefehl ein Ladebefehl (LD DISP (I x 2)) ist, und der zweite davon abgeteilte zweite Innenbefehl ein Speicherbefehl (ST (I x 1)) ist.

3. Mikroprozessor nach Anspruch 1, dadurch gekennzeichnet, daß dann, wenn der erste Innenbefehl in die zweite Stufe geschoben wird, um so einen Operanden aus der ersten Effektivadresse auszulesen, der zweite Innenbefehl in der ersten Stufe abgelegt wird, um so die zweite Effektivadresse zu berechnen, und dadurch die Berechnung der zweiten Effektivadresse des einen Operanden und das Auslesen des Operanden aus der ersten Effektivadresse zum selben Zeitpunkt zu ermöglichen.

## Revendications

1. Système de traitement pipeline à microprocesseur comportant :
- un moyen de décodeur (1) pour décoder chaque ordre envoyé à partir d'un moyen extérieur et afin de déterminer si un ordre particulier comporte une multitude d'opérandes de mémoire;
- un moyen de division (3) connecté audit moyen de décodeur divisant ledit ordre ayant une multitude d'opérandes de mémoire en une multitude d'ordres intérieurs, chacun ayant un seul opérande, respectivement; et
- un moyen d'exécution (5) connecté audit moyen de division afin d'exécuter successivement lesdits ordres intérieurs;
- ledit moyen d'exécution comprenant un seul circuit de calcul d'adresses effectives (10) ayant un registre universel (11) qui comporte à son tour une multitude de registres, un additionneur (13) et un second registre (15);
- ledit moyen d'exécution comprenant en outre au moins des premier et second étages de pipeline (Q₁, Q₂) pour stocker des ordres intérieurs à la suite les uns des autres, où alors qu'un premier ordre intérieur est stocké dans ledit premier étage, l'adresse effective de son opérande est calculée, et alors qu'un second ordre intérieur est stocké dans ledit second étage, l'opérande dudit second ordre intérieur est traité,
- dans le but de calculer au moins des première et seconde adresses effectives (A, B) des opérandes de mémoire, où au moins le calcul de la seconde adresse effective (B) et le traitement d'un premier opérande sont effectués en même temps.

2. Microprocesseur selon la revendication 1, dans lequel ledit premier ordre intérieur divisé à partir de l'ordre (PUSH DISP (I x 2)) envoyé depuis le moyen externe est un ordre de charge (LD DISP (I x 2)) et ledit second ordre intérieur et divisé à partir de celui-ci est un ordre de stockage (ST (I x 1)).

3. Microprocesseur selon la revendication 1, dans lequel, lorsque le premier ordre intérieur est déplacé jusqu'au second stade de manière à lire un opérande à partir de la première adresse effective, le second ordre intérieur est placé dans le premier étage de façon à calculer la seconde adresse effective, ce qui permet le calcul de la seconde adresse effective d'un opérande et la lecture de l'opérande à partir de la première adresse effective, en même temps.
